(19) Europäisches Patentamt
European Patent Office
Office européen des brevets

(11) Publication number: 0 251 465
A2

# (12) EUROPEAN PATENT APPLICATION

(21) Application number: 87304369.9

(22) Date of filing: 18.05.87

(51) Int. Cl.$^3$: C 09 J 3/14
C 08 F 220/00

(30) Priority: 28.05.86 US 868221

(43) Date of publication of application:
07.01.88 Bulletin 88/1

(84) Designated Contracting States:
DE FR GB

(71) Applicant: LOCTITE CORPORATION
705 North Mountain Road
Newington, Connecticut 06111(US)

(72) Inventor: Woods, John
138 Upper Kilmacud
Stillorgan Co. Dublin(IE)

(72) Inventor: Coakley, Pauline
92, Mourne Road
Drimnargh Dublin 12(IE)

(74) Representative: Marchant, James Ian et al,
Elkington and Fife High Holborn House 52/54 High
Holborn
London WC1V 6SH(GB)

## (54) Light activatable anaerobic composition containing latent sulfonic acid source.

(57) An improved light activatable anaerobic curable composition of the type comprising:

a) an acrylate or methacrylate monomer or prepolymer;
b) a peroxide compound;
c) a ferrocenyl compound; and
d) an α- or β-sulfonyloxyacetophenone compound of the formula I, II or III.

I 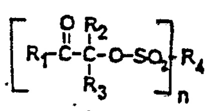

II 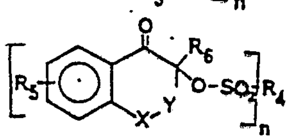

III 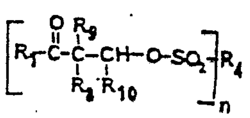

in which $R_1$ - $R_{10}$, X, Y and n are as defined in Claim 1. The α- or β-sulfonyloxyphenone compound used in the compositions of the invention are distinguished by their rapid activation over existing onium salts.

EP 0 251 465 A2

# LIGHT ACTIVATABLE ANAEROBIC COMPOSITION CONTAINING LATENT SULFONIC ACID SOURCE

## BACKGROUND OF THE INVENTION

The present invention is a continuation-in-part of U.S. Serial Number 734,717 which is a continuation-in-part of U.S. Serial Number 515,540, U.S. Pat. 4,533,446.

Light activated anaerobics are compositions which give a substantial open time after irradiation during which they are stable in the presence of oxygen and during which, if oxygen is excluded as by assembling the substrates, polymerization will be initiated. This involves a very different polymerization mechanism than ordinary photopolymerizations which are not known to have such delayed activity.

In U.S. Pat. No. 4,533,446, there are described light activated anaerobics which comprise a (meth)acrylate monomer (i.e. an acrylate or methacrylate functional compound); a compound which decomposes on exposure to ultraviolet or visible light to release a strong acid; a peroxy free radical initiator; and a ferrocenyl compound which, in the presence of a strong acid, activates the peroxy initiated polymerization of the monomer.

Kirchmayr et al, U.S. 4,510,290, and U.S. 4,504,372 disclose compounds which degrade on

irradiation to release sulfonic acids which in turn initiate cure of acid curable resins such as melamine, phenol-formaldehyde resins, methylol resins, etc., by acidic catalyzed condensation reactions at elevated temperatures.

The present invention relates to a new class of light activatable anaerobic compositions which utilize compounds of the type disclosed in U.S. 4,510,290 and U.S. 4,504,372. The acid releasing compounds in the present invention exhibit favorable shelf stability over a wide range of conditions. They differ from the compositions employing known cationic photoinitiators as disclosed in U.S. 4,533,446 since the acid releasing compounds utilized herein are unable to induce cationic polymerization of epoxies when irradiated.

## SUMMARY OF THE INVENTION

The present invention is a novel light activated anaerobic composition which comprises:

a) A (meth)acrylate functional compound;

b) a peroxy free radical initiator preferably a hydroperoxide compound;

c) a ferrocenyl compound suitably ferrocene or hydrocarbyl substituted ferrocenes; and,

d) an α - or β -sulfonyloxyacetophenone compound of the formulae I, II or III.

I 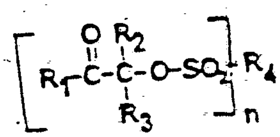

II 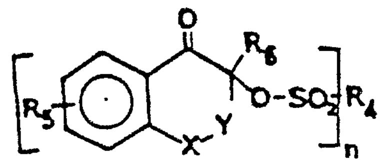   III 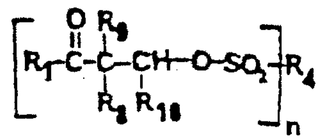

In which n is a positive integer; $R_1$ is aryl which is substituted or unsubstituted; $R_2$ is hydrogen, benzoyl or $C_1$-$C_8$-alkyl which is unsubstituted or substituted; $R_3$ is as defined for $R_2$ or phenyl which is unsubstituted or substituted, or $R_2$ and $R_3$, together with the carbon atom to which they are attached constitute a $C_4$-$C_6$-cycloalkyl ring; X is -O-, -S-, $-SO_2$, $-CH_2$, $-C(CH_3)_2-$ or >N-$COR_7$, $R_7$ being $C_1$-$C_4$-alkyl or phenyl; Y is a direct bond or $-CH_2$; and, $R_4$ is an n-valent hydrocarbyl group which is unsubstituted or substituted by halogen or which may have one or more oxygen atoms interrupting the carbon atoms thereof or $R_4$ is an organic or silicone polymer having n pendant or terminal hydrocarbylene groups; $R_5$ is H or 1, 2 or 3 radicals belonging to the group consisting of halo, benzoyl, hydrocarbyl, hydrocarbyloxy, cyano, nitro, hydrocarbylthio, hydroxyalkylenethio, hydrocarbylsulfonyl or hydrocarbylamide; $R_6$ is as defined for $R_3$; $R_8$ is hydrogen, -OH or alkyl, $R_9$ is hydrogen or alkyl, and $R_{10}$ is hydrogen, aryl, alkenyl, furyl, or $-CCl_3$.

The inventive compositions are surprisingly activated to anaerobically polymerizable compositions under irradiation conditions which will not induce polymerization of epoxy monomers. Of particular significance is their rapid activation over existing onium salts.

## DETAILED DESCRIPTION OF THE INVENTION

The ingredients of the inventive compositions, with the exception of the α- and β -sulfonyloxyacetophenone derivatives (d), have previously been set forth in U.S. 4,533,446. In particular, examples of suitable and preferred (meth)acrylate compounds, such as urethane-methacrylate resins and hydroxy functional acrylic monomers, are given in Column 3 thereof and examples of suitable peroxy compounds and ferrocenyl compounds are given at Col. 6, ln. 48 - Col. 7, ln. 8 thereof. Further examples of suitable monomers, peroxy compounds and ferrocenyl compounds may be found in U.S. 3,855,040. Preferred ferrocenyl compounds include ferrocene and hydrocarbyl substituted ferrocenes. Preferred peroxy compounds are hydroperoxide components such as cumene hydroperoxide and t-butylhydroperoxide. Suitable quantity levels of such ingredients and other types of additives which may be usefully employed in the compositions of the invention are also described in those references.

The α- or β-sulfonyloxyacetophenone compounds (d) are obtainable commercially or may be prepared by a skilled organic chemist by methods described in U.S. 4,510,290 or 4,504,372.

In Formula I, II and III, n is a positive integer, suitably 1 or 2 and $R_1$ is aryl which is unsubstituted or substituted by halo, benzoyl, hydrocarbyl, hydrocarbyloxy, cyano, nitro, hydrocarbylthio, hydroxyalkylenethio, hydrocarbylsulfonyl, hydrocarbylamido or heterocylic groups in which the heteroatoms are selected from the group consisting of oxygen and sulfur atoms. For

example, $R_1$ may be phenyl or naphthl substituted by 1, 2 or 3 radicals belonging to the group comprising -Cl, -Br, -CN, $-NO_2$, $C_1$-$C_{12}$-alkyl, $C_1$-$C_4$-alkoxy, phenoxy, tolyloxy, phenylthio, tolylthio, $C_1$-$C_8$-alkylthio, $-SCH_2CH_2OH$, $C_1$-$C_4$-alkylsulfonyl, phenylsulfonyl, $C_2$-$C_4$-alkoxycarbonyl, phenyl-CONH-, $C_1$-$C_4$-alkyl- CONH- or benzoyl. Or $R_1$ may also be anthryl, phenanthryl, thienyl, pyridyl, furyl, indolyl or tetrahydronaphthyl. $R_2$ is hydrogen, benzoyl, or $C_1$-$C_8$-alkyl which is unsubstituted or substituted for example, by -OH, -Cl, $C_1$-$C_4$-alkoxy, -CN, $C_2$-$C_5$-alkoxycarbonyl, phenyl, chlorophenyl, $C_7$-$C_{10}$-alkylphenyl or $C_7$-$C_{10}$-alkoxyphenyl. $R_3$ is as defined for $R_2$ or phenyl which is unsubstituted or substituted, for example, by -Cl, $C_1$-$C_4$-alkyl, $C_1$-$C_4$-alkoxy or $C_1$-$C_4$-alkylthio, $C_2$-$C_8$-alkoxycarbonyl, -CN, $C_1$-$C_4$-alkyl-NH-CO-, phenyl-NH-CO- or $-CONH_2$. Alternatively, $R_2$ and $R_3$, together with the carbon atom to which they are attached, constitute a $C_4$-$C_6$-cycloalkyl ring. X is -O-, -S-, $-SO_2-$, $-CH_2-$, $-C(CH_3)_2-$ or $>NOCOR_7$, $R_7$ being $C_1$-$C_4$-alkyl or phenyl. Y is a direct bond or $-CH_2-$. $R_4$ is an n-valent hydrocarbyl group, such as $C_1$-$C_{18}$ alkyl or phenyl, which may be substituted with halogen atoms or which may have one or more ether oxygen atoms interrupting the carbon atoms thereof, or $R_4$ is an organic or silicone polymer having n pendant or terminal hydrocarbylene groups. Suitable $R_4$ groups when n is 1 are alkyl, cycloalkyl, aryl, aralkyl, alkaryl or camphoryl. Suitable $R_4$ groups when n is 2 are alkylene, phenylene, napthalene and alkyl substituted phenylene or napthalene.

$R_5$ is H or 1, 2 or 3 radicals belonging to the group comprising halo, benzoyl, hydrocarbyl, hydrocarbyloxy, cyano, nitro, hydrocarbylthio, hydroxyalkylenethio, hydrocarbylsulfonyl or hydrocarbylamido. $R_6$ is as defined for $R_3$.

$R_8$ is hydrogen, -OH or alkyl, $R_9$ is hydrogen or alkyl, $R_{10}$ is hydrogen, aryl, alkenyl, furyl or $-CCl_3$.

$C_1$-$C_{12}$-alkyl substituents in phenyl or naphthyl, as $R_1$, are linear or branched substituents, for example methyl, ethyl, n-propyl, isopropyl, n-butyl, sec.-butyl, tert-butyl, pentyl, hexyl, heptyl, octyl, nonyl, decyl, undecyl or dodecyl, but particularly methyl. $C_1$-$C_4$-alkoxy substituents in phenyl or naphthyl, as $R_1$, are, for example, methoxy, ethoxy, propoxy or tert.-butoxy.

$C_1$-$C_8$-alkylthio substituents in phenyl or naphthyl, as $R_1$, and in $R_5$ are linear or branched substituents, for example methylthio, ethylthio, n-propylthio, isopropylthio, n-butylthio, sec.-butylthio, tert-butylthio, pentylthio, hexylthio, heptylthio or octylthio, but particularly methylthio.

A $C_1$-$C_4$-alkylsulfonyl substituent in phenyl or naphthyl, as $R_1$, is, for example, methylsulfonyl, ethylsulfonyl, propylsulfonyl, butylsulfonyl or tert.-butylsulfonyl.

A $C_1$-$C_4$-alkyl-CONH- substituent in phenyl or naphthyl, as $R_1$, is, for example, methyl-CONH-, ethyl-CONH-, propyl-CONH- or n-butyl-CONH-, $C_1$-$C_4$-alkyl-NHCO- present in $R_2$ or $R_3$, and $C_1$-$C_4$-alkyl-CONH- present in $R_4$ are, for example, respectively, methyl-NHCO- ethyl-NHCO-, propyl-NHCO- or n-butyl-NHCO- substituents or methyl-CONH-, ethyl-CONH-, propyl-CONH- or n-butyl-CONH- substituents.

All the position isomers of thienyl, pyridyl, furyl, indolyl or tetrahydronaphthyl, as $R_1$, are suitable. However, preferred position isomers are 2-thienyl, 3-pyridyl, 2-furyl, 3-indolyl or 1,2,3,4-tetrahydro-6-naphthyl.

As $C_1$-$C_8$-alkyl, $R_2$, $R_3$ and $R_6$ are linear or branched alkyl groups, but preferably linear $C_1$-$C_4$-alkyl groups, for example methyl, ethyl, n-propyl or n-butyl.

$C_1$-$C_4$-alkoxy substituents in $C_1$-$C_8$-alkyl, as $R_2$, $R_3$ and $R_6$, or in phenyl or naphthyl, as $R_4$ or $R_5$, are, for example, methoxy, ethoxy, propoxy or tert.-butoxy substituents.

$C_7$-$C_{10}$-alkylphenyl or $C_7$-$C_{10}$-alkoxyphenyl substituents in $C_1$-$C_8$-alkyl, as $R_2$, $R_3$ and $R_6$, are, for example, methylphenyl, methoxyphenyl, ethylphenyl, ethoxyphenyl, tert.-butylphenyl or tert.-butoxy-phenyl.

$C_1$-$C_4$-alkylthio substituents in phenyl, as $R_3$ and $R_6$, are, for example, methylthio, ethylthio, propylthio or tert.-butylthio.

A cycloalkyl ring which is formed by $R_2$ and $R_3$, together with the C atom to which they are attached, is, for example, a cyclopentane, cyclohexane or cycloheptane ring, but particularly a cyclohexane ring.

$R_4$ may be a linear or branched $C_1$-$C_{18}$-alkyl group, for example methyl, ethyl, propyl, isopropyl, butyl, tert.-butyl, pentyl, hexyl, heptyl, octyl, nonyl, decyl, 2-ethylhexyl, undecyl, dodecyl, tert.-dodecyl, tridecyl, tetradecyl, hexadecyl or octadecyl.

$C_1$-$C_{12}$-alkyl substituents in phenyl or naphthyl, as $R_4$ and in $R_5$ are linear or branched alkyl groups.

$C_5$-$C_6$-cycloalkyl which is represented by $R_4$ are cyclopentyl and cyclohexyl.

$C_7$-$C_9$-aralkyl which is represented by $R_4$ is, for example, 1-phenylethyl, 2-phenylethyl or benzyl.

Camphoryl as $R_4$ is 10-camphoryl.

If n=2: a $-(CH_2)_m-$ group which is represented by $R_4$ is, for example, ethylene, propylene, butylene, pentylene or hexamethylene.

$C_1$-$C_{12}$-alkyl substituents in phenylene or naphthylene are linear or branched alkyl groups.

If the various phenyl groups in the radicals $R_1$, $R_3$, $R_4$ and $R_6$ are substituted by radicals other than hydrogen atoms, this substitution takes place in the ortho-, meta- or para-position, but particularly in the para-position.

Preferred curing catalysts are those of the formula I wherein n is the number 1 or 2, $R_1$ is phenyl or naphthyl which is unsubstituted or is substituted, for example, by -Cl, -Br, $C_1$-$C_8$-alkyl, $C_1$-$C_4$-alkoxy, phenoxy, tolyloxy, phenylthio, tolylthio, $-SCH_2CH_2OH$, $C_1$-$C_8$-alkylthio or benzoyl, or is anthryl or phenanthryl, $R_2$ is hydrogen or $C_1$-$C_8$-alkyl which is unsubstituted or is substituted, for example, by -OH, -Cl, -CN, $C_2$-$C_5$-alkoxycarbonyl, phenyl, chlorophenyl, $C_7$-$C_{10}$-alkylphenyl or $C_7$-$C_{10}$-alkoxyphenyl and $R_3$ is the same as $R_2$, as defined above, and is also phenyl which is unsubstituted or is substituted, for example, by -Cl, $C_1$-$C_4$-alkyl, $C_1$-$C_4$-alkoxy or $C_1$-$C_4$-alkylthio, or is $C_2$-$C_4$-alkoxycarbonyl or -CN, or $R_2$ and $R_3$, together with the carbon atom to which they are attached, form a

$C_4$-$C_6$-cycloalkyl ring and, if n=1, $R_4$ is $C_1$-$C_{18}$-alkyl, phenyl which is unsubstituted or is substituted, for example, by -Cl, $C_1$-$C_{12}$-alkyl, or $C_1$-$C_4$-alkoxy, or is naphthyl which is unsubstituted or is substituted, for example, by -Cl or $C_1$-$C_{12}$-alkyl, or $R_4$ is also camphoryl, $-CF_3$ or -F, and, if n=2, $R_4$ is a $-(CH_2)m$ group, phenylene or naphthylene, m being the number 2, 3 or 4.

Sulfonyloxyacetophenone compounds which are very particularly preferred are those of the formula I in which n=1, $R_1$ is phenyl, p-tolyl or p-methylthiophenyl, $R_2$ is hydrogen, $R_3$ is phenylmethyl, isopropyl, n-decyl or benzyl and $R_4$ is phenyl, p-tolyl or p-n-dodecylphenyl.

Sulfonyloxyacetophenone compounds which are also particularly preferred are those of the formula II in which n=1, $R_5$ and $R_6$ are hydrogen, X and Y are a $-CH_2-$ group and $R_4$ is $C_1$-$C_{18}$-alkyl, phenyl or naphthyl which is unsubstituted or is substituted , for example, by $C_1$-$C_{12}$-alkyl, or is camphoryl.

The following are examples of individual compounds of the formula I: 2-[(p-tolylsulfonyl)-oxy]-1-phenyl-1-propanone, 2-[(p-tolylsulfonyl)-oxy]-1-p-tolyl-1-propanone, 2-[(p-chlorophenyl-sulfonyl)-oxy]-1-phenyl-1-propanone, 2-[(p-lauryl-phenylsulfonyl)-oxy]-1-phenyl-l-propanone, 2-[(p-methoxyphenylsulfonyl)-oxy]-1-phenyl-1-propanone, 2-[(p-methylthiophenylsulfonyl)-oxy]-1-phenyl-1-propanone, 2-[(p-acetamidophenylsulfonyl)-oxy]-1-phenyl-1-propanone, 2-[(methylsulfonyl)-oxy]-1-phenyl-1-propanone, benzoin toluenesulfonate, benzoin methanesulfonate, benzoin p-dodecylbenzenesulfonate, 4,4'-bis-methylthiobenzoin toluenesulfonate, 2-[(o-nitrophenylsulfonyl)-oxy]-1-phenyl-1-propanone,

2-[(benzylsulfonyl)-oxy]-1-phenyl-1-propanone, 2-[(n-octylsulfonyl)-oxy]-1-phenyl-1-propanone, 2-[(cyclohexylsulfonyl)-oxy]-1-phenyl-1-propanone, 2-[(phenylsulfonyl)-oxy]-1-phenyl-1-propanone, 2-[(naphthylsulfonyl)-oxy]-1-phenyl-1-propanone, 2-[(trifluoromethylsulfonyl)-oxy]-1-phenyl-1-propanone, 2-[(chloroethylsulfonyl)-oxy]-1-phenyl-1-propanone, 2-[(mesitylsulfonyl)-oxy]-1-phenyl-1-propanone, 2-[(10-camphorylsulfonyl)-oxy]-1-phenyl-1-propanone, 1-benzoyl-1-methylsulfonyloxy-cyclohexane, 2-[(p-tolylsulfonyl)-oxy]-1-(2'-thienyl)-1-propanone, 2-[(methylsulfonyl)-oxy]-1-(6'-tetralin)-1-propanone, 2-[(p-tolylsulfonyl)-oxy]-1-phenyl-1-octanone, 2-[(p-tolylsulfonyl)-oxy]-1-phenyl-1-dodecanone, 2-[(p-tolylsulfonyl)-oxy]-1-p-tolyl-1-dodecanone, 2-[(methylsulfonyl)-oxy]-4-ethoxycarbonyl-1-phenyl-1-butanone, 2-[(p-tolylsulfonyl)-oxy]-acetophenone, 2-[(p-tolylsulfonyl)-oxy]-2-methyl-1-phenyl-1-propanone, 2-[(10'-camphorylsulfonyl)-oxy]-acetophenone, 2-[(10'-camphorylsulfonyl)-oxy]-2-methyl-1-(p-methyl)- phenyl-1-propanone, 2-[(10'-camphorylsulfonyl)-oxy]- 2-methyl-1-(p-methylthio)-phenyl-1-propanone, 2-[(10'-camphorylsulfonyl)-oxy]-1-p-(-hydroxyethylthio) -phenyl-1-propanone, 2-[(10'-camphorylsulfonyl)-oxy]-1-(p-chloro)-phenyl-1-propanone, 2-[(p-tolylsulfonyl)-oxy]-1,3-bis-phenyl-1-propanone, 2-[(methylsulfonyl)-oxy]-1,3-bis-phenyl-1-propanone, 2-[(p-tolylsulfonyl)-oxy]-3-phenyl-1-p-tolyl-1-propanone, 2-[(p-laurylphenylsulfonyl)-oxy]-1,3-bis-phenyl-1-propanone, 2-[(p-tolylsulfonyl)-oxy]-2-methoxymethyl-1-phenyl-1-propanone, 2-[(methylsulfonyl)-oxy]-2-chloromethyl-1-phenyl-1-propanone, 2-[(p-tolylsulfonyl)-oxy]-p-methylthioacetophenone, 2-[(methylsulfonyl)-oxy]-1-(p-methylthio)-phenyl-1-propanone, 2-[(p-tolylsulfonyl)-oxy]-1-(p-methylthio)-phenyl-1-propanone, 2-[(p-laurylphenylsulfonyl)-oxy]-1-(p-methylthio)phenyl-1-propanone, 2-[(p-tolysulfonyl)-oxy]-3-phenyl-1-(p-methylthio)-phenyl-1-propanone, 2-[(p-tolylsulfonyl)-oxy]-1-(p-phenylthio)-phenyl-1-propanone, 2-[(p-tolylsulfonyl)-oxy]-1-(p-acetamido)-phenyl-1-propanone, 2-[(p-lauryl-phenylsulfonyl)-oxy]-3-methyl-1-p-methylthiophenyl-1-butanone, 2-[(p-tolysulfonyl)-oxy]-3-methyl-1-phenyl-1-butanone, 2-[(p-tolylsulfonyl)-oxy]-3-methyl-1-p-tolyl-1-butanone, 2-[(p-tolylsulfonyl)-oxy]-1-naphthyl-1-propanone, 2-[(p-tolylsulfonyl)-oxy]-2-ethoxycarbonylacetophenone, diethyl 3-[(p-tolylsulfonyl)-oxy]-3-benzoylmalonate, (1'-benzoyl)-ethyl phthalic-anhydride-5-sulfonate, (1'-methyl-1'-benzoyl)-ethyl N-methylphthalimide-5-sulfonate, bis-(1'-benzoyl)-ethyl naphthalene-2,6-disulfonate and bis-(1'-benzoyl-1'-methyl)-ethyl dinonylnaphthalenedisulfonate.

The following are examples of individual compounds of the formula II: 2-[(methylsulfonyl)-oxy]-2-methyltetral-1-one, 2-[(methylsulfonyl)-oxy]-tetral-1-one, 2-[(p-tolylsulfonyl)-oxy]-tetral-1-one, 2-[(p-laurylphenylsulfonyl)-oxy]tetral-1-one, 3-[(p-tolylsulfonyl)-oxy]-chromone, 3-[(p-tolylsulfonyl)-oxy]-1-thiochroman-4-one, 3-[(camphorylsulfonyl)-oxy]-1-triochroman-4-one-S-dioxide, 2-[(methylsulfonyl)-oxy]-coumaran-3-one and 2-[(phenylsulfonyl)-oxy]-indan-1-one.

The compounds of the formulae I-III are known and can be prepared by known processes, for example by reacting the corresponding hydroxy compounds of the formulae IV (a-c):

IV (a) 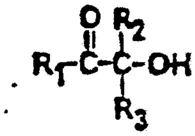

(b) 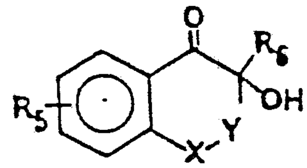

(c) 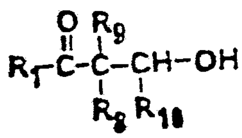

with an equivalent amount of the corresponding monosulfonyl, disulfonyl or polysulfonyl chlorides, respectively, of the formula V

$$R_4(SO_2Cl)_n \qquad V$$

in the presence of a base [in this connection see Journal of the Chemical Society, Perkin I, 1981, page 263 or Journal of Org. Chem. 34, 1,595 (1969)]. Examples of polysulfonyl chlorides include chlorosulfonated polyethylene and chlorosulfonated polystyrene.

Further synthetic methods for the compounds of Formulae I, II and III are disclosed in U.S. 4,504,372 and 4,510,290.

The sulfonyloxoacetophenone compounds according to the invention are added to the resins in an amount which is adequate for curing.

In general, 0.1 to 10% by weight, preferably 0.5 to 5% by weight, based on the acrylic monomer or prepolymer used. It is also possible to employ mixtures of the curing catalysts according to the invention.

The invention is further illustrated by reference to the following Examples:

EXAMPLE 1:

A solution of 21.2g of benzoin and 430g toluene was prepared by heating the mixture to 70oC. 19.5g of p-toluenesulfonyl chloride was then added and the mixture cooled to 30oC. 6.33g of powdered sodium hydroxide was then added and the mixture stirred for 2.5 hours. After a further 16 hours, the mixture was washed with 3 x 150 ml portions of water and the organic fraction dried over sodium sulfate. The desiccant was removed by filtration and the toluene solution concentrated by removal of part of the solvent under reduced pressure. The mixture was cooled to -18oC. After 16 hours, 9.53g of a crystalline precipitate had formed which was removed by filtration and dried. This material was found to be unreacted benzoin. The filtrate was further concentrated and again cooled to -18oC. After 1 hour, a second crop of crystals had formed. These crystals were collected by filtration and dried to give 7.64g of crude product. This was recrystallized from industrial methylated spirit to yield 4.64g of pure α-tosyloxy-α-phenylacetophenone. The structure was confirmed by NMR and IR spectroscopy and by gel permeation chromatography (GPC):

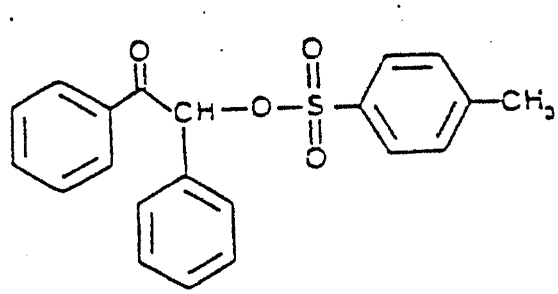

60MHz, Proton NMR ($CDCl_3$): $\tau$ =2.2-3.0, multiplet, 14H, aromatic protons; $\tau$ =3.4, singlet, 1H, methine proton; $\tau$ =7.75, singlet 3H, methyl group.

I.R. (film cast on KBr disc from $CDCl_3$) : 3020 cm-1, (W), AR-H; 1690 cm-1, (S), aromatic carbonyl group, 1590 cm-1, (m), AR-H ; 1320 and 1140 cm-1. (S), $-SO_2-O-$ group.

GPC analysis (microstyrogel columns) indicated only one component, higher in molecular weight than either starting material.

EXAMPLE 2:

A radiation activatable anaerobic composition was prepared by mixing the following ingredients together in the following weight percentages:

| Adhesive Component: | Weight Percent: |
|---|---|
| Monomer A | 30 |
| Monomer B | 65 |
| Cumene hydroperoxide | 2 |
| Ferrocene | 1 |
| $\alpha$-Tosyloxy-$\alpha$-phenylacetophenone | 2 |

Monomer A was a urethane-acrylate reaction product of toluene diisocyanate and the hydroxypoly-oxypropylene derivative of trimethylolpropane (commercially available under the trademark Pluracol TP 2450) having unreacted isocyanate functionality capped with hydroxyethyl methacrylate.

Monomer B was a urethane-acrylate prepared by reacting two moles of toluene diisocyanate with one mole of hydrogenated bisphenol A, diluting the reaction mixture with methyl methacrylate and further reacting it with two moles of hydroxyethyl methacrylate in the manner disclosed in Example V of U.S. Patent No. 3,452,988.

Groups of between 3 and 6 mild steel grit blasted lapshears, 2 centimeters (cms) wide were coated on one face with the adhesive composition of Example 2 and irradiated with a 200W per inch medium pressure mercury arc UV lamp (supplied by Technocure Systems, Inc.) for different periods of time. The coated panels were placed approximately 30 cms directly under the arc at which point the light intnesity at 365nm was measured to be 20mW/cm2 (Optical Associates light meter). After the period of exposure, each coated panel was placed firmly in contact with another uncoated panel of the same dimensions and with the same surface preparation to give in each case a 1/2 inch overlap in the length direction of the lapshears for an adhesive bond to develop. The bonds were left for 67 hours at room temperature to cure. The bond strengths were measured in the tensile shear mode using conventional tensile testing equipment. The results are summarized as follows:

| Exposure Time (secs) | No. of Bonds Prepared | Avg.Tensile Shear Breaking Strength daN/cm2 |
|---|---|---|
| 0 | 3 | 0 |
| 5 | 3 | 25 |
| 7 | 6 | 49 |
| 10 | 6 | 39 |

After 15 secs. irradiation the adhesive had cured and bonds could not be assembled.

EXAMPLE 3:

A radiation activatable composition was prepared by mixing the following ingredients together in the following weight percentages:

| Adhesive Component: | Weight Percent |
|---|---|
| Monomer A | 22 |
| Monomer B | 48 |
| 2-Hydroxypropyl methacrylate | 25 |
| Cumene hydroperoxide | 2 |
| Ferrocene | 1 |
| α-Tosyloxy-α-phenylacetophenone | 2 |

Pairs of mild steel grit blasted lapshears as described in Example 2 were coated with the adhesive composition of Example 3 and irradiated for different periods of time with a 100W/inch medium pressure mercury UV lamp (UVALOC 1000 - supplied by Loctite Deutschland GmbH). The coated panels were located approximately 40 cms directly under the arc at which point the light intensity was found to be 25mW/cm2 (365nm). After the irradiation period, small pieces of stainless-steel wire of constant thickness were bent in a U shape and imbedded into some of the adhesive coatings of one panel of the pair. The coated surfaces of each pair were then firmly placed in contact to give in each case a 1/2 inch overlap in the length direction of the lapshears for an adhesive bond to develop. In those bonds in which the wire had been inserted, bondline gaps equivalent to the diameter of the wire were obtained. The bonds were left for 42 hours at room temperature to cure. The bond strengths were determined as in Example 2 and the results are summarized as follows:

| Diameter of Wire | Exposure Time (secs) 0 | 2 | 3 | 10 |
|---|---|---|---|---|
| 0 | 0 | 80 daN/cm2 (3) | 114 daN/cm2 (2) | -- |
| 0.125mm | 0 | 0 | 41 daN/cm2 (2) | -- |
| 0.400mm | 0 | 0 | 0 | 5.3 daN/cm2 |

In each case, the average breaking strength of a number of bonds was determined and this number is indicated in brackets after the strength value. The stability of the composition at 82oC was 20 mins. ,i.e., gellation occurred after 20 mins. at 82oC.

Example 4

A solution containing 22.9g of methanesulfonyl chloride dissolved in 250mls of toluene was added dropwise over a 60 min. period to a stirred solution of 40.4g of triethyl-amine and 42.4g of benzoin dissolved in 200 mls. of toluene at 50°C. The mixture was then allowed to cool to room temperature. After 15 hours, the solids were removed by filtration, the filtrate washed with 3 x 150ml portions of water and dried over sodium sulfate. The dried solution was evaporated to approximately ½ volume and cooled to 2°C. A white precipitate was formed and collected by filtration to yield 20.7g of product, which was purified by recrystallisation from ethylacetate and cyclohexane. The purified material showed only one peak on analysis by gel permeation chromatography (higher in molecular weight than starting benzoin) and NMR and IR spectra showed the compound to be α-mesyloxy-α-phenylacetophenone having the structure:

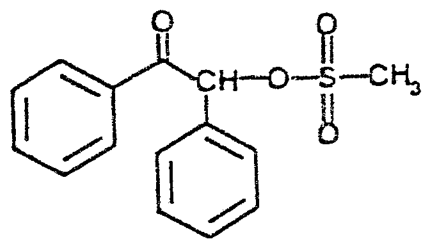

60 $MH_z$ Proton NMR ($CDCl_3$) : τ 1.9 - 2.8, multiplet, 10H, aromatic protons; τ 3.1, 1H, methine proton; τ 6.95 3H, $O-SO_2CH_3$ group.

I.R. (film cast on NaCl disc) : 3020 $cm^{-1}$, (W), Ar-H; 1690 $cm^{-1}$, (S), aromatic carbonyl group; 1590 $cm^{-1}$, (M), Ar-H; 1320 and 1140 $cm^{-1}$, (S), $-SO_2-O-$ group.

The melting point of the compound was 126°C.

Example 5

A radiation activatable composition was prepared as described in Example 3 except that the α-tosyloxy-α-phenylacetophenone was replaced with the α-mesyloxy-α-phenylacetophenone prepared as described in Example 4. Pairs of mild steel grit blasted lapshears were coated with this composition and irradiated with ultraviolet light for different periods of time. The irradiation

conditions employed were the same as those described in Example 3. After the irradiation period, the coated surfaces of each pair were then firmly placed in contact (without gap spacing wire) to give in each case a ½inch overalp in the length direction of the lapshears for an adhesive bond to develop After 24 hours at room temperature, the tensile shear bond strengths were measured and the results obtained were as follows:

| Exposure Time (Secs) | No. of Bonds Prepared | Average Tensile Shear Breaking Strength $dN/cm^2$ |
|---|---|---|
| 0 | 3 | 0 |
| 5 | 3 | 87 |
| 10 | 3 | 136 |

The gellation time of this adhesive composition at 82°C was found to be 27 mins.

## CLAIMS

1) A curable composition comprising:

a) at least one acrylate or methacrylate monomer or prepolymer;

b) a peroxide compound;

c) a ferrocenyl compound; and

d) an α -or β-sulfonyloxyacetophenone derivative of the formulae I, II or III:

I

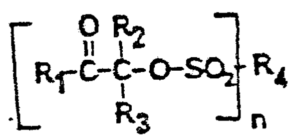

II

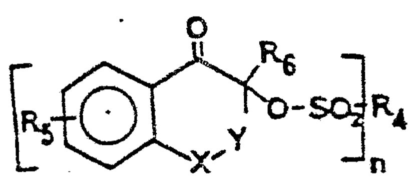

III

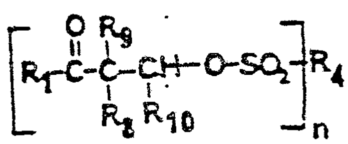

in which n is a positive integer; $R_1$ is aryl which is substituted or unsubstituted; $R_2$ is hydrogen, benzoyl or $C_1$-$C_8$-alkyl which is unsubstituted or substituted; $R_3$ is as defined for $R_2$ or phenyl which is unsubstituted or substituted, or $R_2$ and $R_3$, together with the carbon atom to which they are attached constitute a $C_4$-$C_6$-cycloalkyl ring; X is -O-, -S-, $-SO_2-$, $-CH_2-$, $-C(CH_3)_2-$ or >N-$COR_7$, $R_7$ being $C_1$-$C_4$-alkyl or phenyl; Y is a direct bond or $-CH_2-$; and, $R_4$ is an n-valent hydrocarbyl group which is unsubstituted or substituted by halogen or which may have one or more oxygen atoms interrupting the carbon atoms thereof or R4 is an organic or silicone polymer having n pendant or terminal hydrocarbylene groups; $R_5$ is H or 1, 2 or 3 radicals belonging to the group consisting of halo, benzoyl, hydrocarbyl, hydrocarbyloxy, cyano, nitro, hydrocarbylthio, hydroxyalkylenethio, hydrocarbylsulfonyl or hydrocarbylamide; $R_6$ is as defined for $R_3$; $R_8$ is hydrogen, -OH or alkyl, $R_9$ is hydrogen or alkyl, and $R_{10}$ is hydrogen, aryl, alkenyl, furyl, or $-CCl_3$.

2) A composition according to Claim 1, in which the sulfonyloxyacetophenone derivatives are selected from a group consisting of the following compounds:

2-[(p-tolylsulfonyl)-oxy]-1-phenyl-1-propanone, 2-[(p-tolylsulfonyl)-oxy]-1-p-tolyl-1-propanone, 2-[(p-chlorophenylsulfonyl)-oxy]-1-phenyl-1-propanone, 2-[(p-laurylphenylsulfonyl)-oxy]-1-phenyl-1-propanone, 2-[(p-methoxyphenylsulfonyl)-oxy]-1-phenyl-1-propanone, 2-[(p-methylthiophenyl-sulfonyl)-oxy]-1-phenyl-1-propanone, 2-[(p-acetamido-phenylsulfonyl)-oxy]-1-phenyl-1-propanone, 2-[(methylsulfonyl)-oxy]-1-phenyl-1-propanone, benzoin toluenesulfonate, benzoin methanesulfonate, benzoin p-dodecylbenzenesulfonate, 4,4'-bis-methylthiobenzoin toluenesulfonate, 2-[(o-nitrophenylsulfonyl)-oxy]-1-phenyl-1-propanone, 2-[(benzylsulfonyl)-oxy]-1-phenyl-1-propanone, 2-[(n-octylsulfonyl)-oxy]-1-phenyl-1-propanone, 2-[(cyclohexylsulfonyl)-oxy]-1-phenyl-1-propanone, 2-[(phenylsulfonyl)-oxy]-1-phenyl-1-propanone, 2-[(naphthylsulfonyl)-oxy]-1-phenyl-1-propanone, 2-[(trifluoromethylsulfonyl)-oxy]-1-phenyl-1-propanone, 2-[(chloroethylsulfonyl)-oxy]-1-phenyl-1-propanone, 2-[(mesitylsulfonyl)-oxy]-1-phenyl-1-propanone, 2-[(10'camphorylsulfonyl)-oxy]-1-phenyl-1-propanone, 1-benzoyl-1-methylsulfonyloxy-cyclohexane, 2-[(p-tolylsulfonyl)-oxy]-1-(2'-thienyl)-2-propanone, 2-[(methylsulfonyl)-oxy]-1-(6'-tetralin)-1-propanone, 2-[(p-tolylsulfonyl)-oxy]-1-phenyl-1-octanone, 2-[(p-tolylsulfonyl)-oxy]-1-phenyl-1-dodecanone, 2-[(p-tolysulfonyl)-oxy]-1-p-tolyl-1-dodecanone, 2-[(metnylsulfonyl)-oxy]-4-ethoxycarbonyl-1-phenyl-1-butanone, 2-[(p-tolylsulfonyl)-oxy]-acetophenone, 2-[(p-tolylsulfonyl)-oxy]-2-methyl-1-phenyl-1-propanone, 2-[(10'-camphorylsulfonyl)-oxy]-aceto-phenone, 2-[(10'-campnorylsulfonyl)-oxy]-2-methyl-1-(p-metnyl)-phenyl-1-propanone, 2-[(10'-camphoryl-sulfonyl)-oxy]-2-methyl-1-(p-metnyltnio)-phenyl-1-

propanone, 2-[(10'-camphorylsulfonyl)-oxy]-1-p-(hydroxyethylthio)-phenyl-1-propanone, 2-[(10'-camphorylsulfonyl)-oxy]-1-(p-chloro)-phenyl-1-propanone, 2-[(p-tolylsulfonyl)-oxy]-1,3-bis-phenyl-1-propanone, 2-[(methylsulfonyl)-oxy]-1,3-bis-phenyl-1-propanone, 2-[(p-tolylsulfonyl)-oxy]-3-phenyl-1-p-tolyl-1-propanone, 2-[(p-lauryl-phenylsulfonyl)-oxy]-1,3-bis-phenyl-1-propanone, 2-[(p-tolylsulfonyl)-oxy]-2-methoxymethyl-1-phenyl-1-propanone, 2-[(methylsulfonyl)-oxy]-2-chloromethyl-1-phenyl-1-propanone, 2-[(p-tolylsulfonyl)-oxy]-p-methylthioacetophenone, 2-[(methylsulfonyl)-oxy]-1-(p-methylthio)-phenyl-1-propanone, 2-[(p-tolyl-sulfonyl)-oxy]-1-(p-methylthio)-phenyl-1-propanone, 2-[(p-laurylphenylsulfonyl)-oxy]-1-(p-methylthio)-phenyl-1-propanone,
2-[(p-tolylsulfonyl)-oxy]-3-phenyl-1-(p-methylthio)-phenyl-1-propanone,
2-[(p-tolylsulfonyl)-oxy]-1-(p-phenylthio)-phenyl-1-propanone, 2-[(p-tolylsulfonyl)-oxy]-1-(p-acetamido)-phenyl-1-propanone, 2-[(p-laurylphenylsulfonyl)-oxy]-3-methyl-1-p-methylthiophenyl-1-butanone,
2-[(p-tolylsulfonyl)-oxy]-3-methyl-1-phenyl-1-butanone,
2-[(p-tolylsulfonyl)-oxy]-3-methyl-1-p-tolyl-1-butanone, 2-[(p-tolylsulfonyl)-oxy]-1- -naphthyl-1-propanone, 2-[(p-tolylsulfonyl)-oxy]-2-ethoxy-carbonylacetophenone, diethyl 3-[(p-tolylsulfonyl)-oxy]-3-benzoylmalonate, (1'-benzoyl)-ethyl phthalic-anhydride-5-sulfonate, (1'-methyl-1'-benzoyl)-ethyl N-methylphthalimide-5-sulfonate, bis-(1'-benzoyl)-ethyl naphthalene-2,6-disulfonate and bis-(1'benzoyl-1'-methyl)-ethyl dinonylnaphthalenedisulfonate,
2-[(methylsulfonyl)-oxy]-2-methyltetral-1-one,
2-[(methylsulfonyl)-oxy]-tetral-1-one,
2-[(p-tolylsulfonyl)-oxy]-tetral-1-one,
2-[(p-laurylphenylsulfonyl)-oxy]tetral-1-one,

3-[(p-tolylsulfonyl)-oxy]-chromone, 3-[(p-tolylsulfonyl)-oxy]-1-thiochroman-4-one, 3-[(camphorylsulfonyl)-oxy]-1-thiochroman-4-one-S-dioxide, 2-[(methylsulfonyl)-oxy]-coumaran-3-one and 2-[(phenylsulfonyl)-oxy]-indan-1-one.

3) A composition according to Claim 2 in which the sulfonyloxyacetophenone derivative is selected from a group consisting of the following compounds:

2-[(p-tolylsulfonyl)-oxy]-1-phenyl-1-propanone, 2-[(p-tolylsulfonyl)-oxy]-1-p-tolyl-1-propanone, 2-[(p-tolylsulfonyl)-oxy]-1-p-methylthiophenyl-1-propanone, 2-[(p-tolylsulfonyl)-oxy]-1,3-bis-phenyl-1-propanone, 2-[(p-tolylsulfonyl)-oxy]-3-phenyl-1-p-tolyl-1-propanone, 2-[(p-tolylsulfonyl)-oxy]-3-methyl-1-phenyl-1-butanone, 2-[(p-tolylsulfonyl)-oxy]-3-methyl-1-p-tolyl-1-butanone, 2-[(p-tolylsulfonyl)-oxy]-1-phenyl-1-dodecanone, 2-[(p-tolylsulfonyl)-oxy]-1-p-tolyl-1-dodecanone, 2-[(p-laurylphenylsulfonyl)-oxy]-3-methyl-1-p-methylthiophenyl-1-butanone and 2-[(p-tolylsulfonyl)-oxy]-tetral-1-one.

4) A composition according to Claim 1, in which the methacrylate monomer (a) includes a urethane-methacrylate resin.

5) A composition of Claim 4 in which the monomer component (a) further includes an alkylene hydroxy functional acrylate or methacrylate monomer.

6) A composition of Claim 1 in which the ferrocenyl compound is selected from ferrocene and hydrocarbyl substituted ferrocenes.

7) A composition of Claim 6 in which the ferrocenyl compound is ferrocene.

8) A composition of Claim 1 in which the peroxy initiator is a hydroperoxide.